# EUROPEAN PATENT APPLICATION

(11) **EP 2 093 192 A1**
(43) Date of publication of application: **26.08.2009**
(21) Application number: 08101942.4
(22) Date of filing: 25.02.2008
(51) Int. Cl.: C01F 17/00, C01B 25/37, C01B 25/45, C09K 11/77

(54) **Preparation of nanoparticles from metal salts**

(71) Applicant: Koninklijke Philips Electronics N.V., 5621 BA Eindhoven (NL)
(72) Inventor: The designation of the inventor has not yet been filed
(74) Representative: Plünnecke, Ingo

(57) **Abstract**

The invention concerns a novel micellar method for the precipitation of metal oxide or metal phosphate nanoparticles as well as novel metal oxide or metal phosphate nanoparticles and the application of colloidal suspensions gained from the novel nanoparticles for optical imaging, e.g. for *in-vivo* imaging.

## Description

### FIELD OF THE INVENTION

The invention concerns a novel micellar method for the precipitation of oxidic nanoparticles as well as novel oxidic nanoparticles and the application of colloidal suspensions gained from the novel nanoparticles for optical imaging, e.g. for *in-vivo* imaging.

### BACKGROUND OF THE INVENTION

Nanoscale particles have found numerous application in general and special lighting, security marking, optical medical imaging, and marking of biochemical molecules, organelles, cells, or tissue.
Many physical and chemical processes have thus been developed to obtain nanoscale particles with a distinct particle size distribution and defined shape.
Among the chemical methods, sol-gel chemistry is becoming a standard technique in synthesizing oxidic nanoscale materials and is based on the hydrolysis of reactive metal precursors, usually alkoxides in an alcoholic solution, resulting in a gel that is subsequently thermally or hydrothermally treated to yield the nanostructured product. Advantages of the sol-gel technique are its simplicity and potential to produce ultrafine powders having high chemical homogeneity, which has been proven for many oxidic nanomaterials.
Alternatively, micellar methods are regarded as a promising technique, in which micelles are employed as microreactors. This process yields the oxide or oxide precursor by reaction between solved cations and a precipitating agent (OH⁻, PO₄³⁻ or other anions). This method is also used to obtain ultrafine powder. Micellar methods are described in WO 2000/71465A1, US 5,935,275, US 6,752,979, US 2004/0033345, US 2005/0106098.

### SUMMARY OF THE INVENTION

Subject of the present invention comprises the synthesis of Me₂O₃ or MePO₄ (Me = Al, Fe, Cr, In, Sc, Y, La - Lu) nanoscale particles in aqueous acidic solution. Monodisperse particles with an average diameter of 1 to 10 nm are prepared in aqueous solution by the application of an amphiphilic carbon acid or blends thereof, preferably with a melting point between 0° and 100°C to a solution of MeX₃ X = Cl, Br, I or Me(R-COO)₃ with R = H, CH₃, C₂H₅, C₃H₇, CH(CH₃)₂. Optionally a precipitant may be added to said aqueous solution which is selected from the group comprising AMeH₂PO₄ or AH₂PO₄ (AMe = alkali metal, A = ammonium) AMe₂HPO₄ or A₂HPO₄, or H₃PO₄ in water.
In case the above-mentioned precipitants are added MePO₄ nanoparticles are synthesized. In case the above-mentioned precipitants are not added Me₂O₃ nanoparticles are synthesized.
The carbon acid molecules align to micelles in water, in which nanoscale particles evolves due to a pH enhancement by the addition of e.g. ammonia. Thus, subject of the invention is the application of solid fatty amphiphilic acids having a melting point between 0° and 100°C for the synthesis and stabilization of nanoscale particles in water-based emulsions. This allows the formation of an emulsion by melting the carbon acid. After the nanoscale particles have been formed within the micelles due to pH enhancement and heating, the excess of carbon acid is separated by cooling down the emulsion, which in turn freezes out the excess fatty acid. By separation the excess of solid carbon acid a colloidal suspension is obtained that comprises 1 to 10 nm

Subject of the present invention is a method for the preparation of Me₂O₃ nanoparticles or MePO₄ nanoparticles that are thermodynamically stabilized by the complexation of the surface metal cations by carboxylic groups of amphiphilic carboxylic acids and synthesized by precipitation in micellar microreactors comprising the steps of:
a. providing an aqueous solution comprising a metal salt or a blend of metal salts wherein the metal salt is selected from the group consisting of Me(III)-halide (e.g. chlorides), Me(III)-carbon acids (e.g. acetates) wherein the aqueous solution has a pH of below 6 to 7and wherein optionally a precipitant is added which is selected from the group comprising phosphates (phosphoric acid, phosphates or hydrogen phosphates) and;
b. adding one or more amphiphilic carboxylic acids to said aqueous solution, wherein the amphiphilic carboxylic acids have melting points in the range of from 0°C to 100°C;whereby the amphiphilic carboxylic acids form micelles;
c. raising the pH above 6 to 7 and raising the temperature above the melting temperature of the carboxylic acid, whereby the micelles of amphiphilic carboxylic acids form the microreactor and the Me₂O₃ nanoparticles or MePO₄ nanoparticles precipitate within the micelle microreactor;
d. cooling the solution below the melting point of the amphiphilic organic acid; and cooling down of the solution at room temperature causes a formation of a second phase, which is the crystallised carboxylic acid;
e. separating the solid phase from the colloidal solution the latter comprising the Me₂O₃ nanoparticles or MePO₄ nanoparticles, respectively.

Another subject of the present invention are nanoparticles obtainable by the method according to the present invention having a diameter of from 1 to 10 nm comprising amphiphilic carboxylic acids, wherein the carboxylic acids are arranged in a way that the carboxyl groups are at the inside of said nanoparticles and the hydrophobic tails of said carboxylic acids are at the outside of said nanoparticles and wherein Me₂O₃ or MePO₄ are coordinated to said carboxyl groups at the inside of said nanoparticles.

Another subject of the present invention is the use of a nanoparticle according to the present invention as an imaging agent.

According to the present invention the Me is selected from the group consisting of Al, Fe, Cr, In, Sc, Y, La, Ce, Pr, Nd, Pm, Sm, Eu, Gd, Tb, Dy, Ho, Er, Tm, Yb and Lu.

According to a preferred embodiment of the present invention the amphiphilic carboxylic acids have melting points in the range of from 0°C to 100°C.

In a preferred embodiment the carboxylic acid is selected from the group consisting of oleic acid, capric acid, erucic acid, laurin acid, palmitic acid, myristic acid, brassidic acid, stearic acid, arachidic acid and behenic acid.

In an especially preferred embodiment of the invention the nanoparticle according to the invention additionally comprise a luminescent ion. Preferably, said luminescent ion emits in the near IR range.

The precipitated nanoscale particles of the present invention are thermodynamically stabilized due to the complexation of the metal cations located at the surface by the carboxylic groups of the fatty acid. The nanoscale particles of the present invention show long term stability.

The particles of the present invention have a size between 1 and 10 nm. The particle of the present invention exhibit a narrow particle distribution due to the inventive method ot preparation used.

The method for preparation of the nanoscale particles has a good yield,which is at least 70 %, preferably greater than 70%. According to the inventive method it is feasible to separate the formed nanoscale particles from an excess of the detergent forming the micelles.

### BRIEF DESCRIPTION OF THE DRAWINGS

- Fig. 1: Characterization of a Colloidal aqueous solution containing stabilized Gd₂O₃:Nd³⁺ nanoparticles using Dynamic light scattering (Malvern Instruments). d₅₀ = 1.5 nm; d₁₀ = 1.1 nm; d₉₀ = 1.7 nm
- Fig. 2: Characterization of a Colloidal aqueous solution containing stabilized Gd₂O₃:Nd³⁺ nanoparticles using Dynamic light scattering (Malvern Instruments). d₅₀ = 1.1 nm; d₁₀ = 0.8 nm; d₉₀ = 1.5 nm

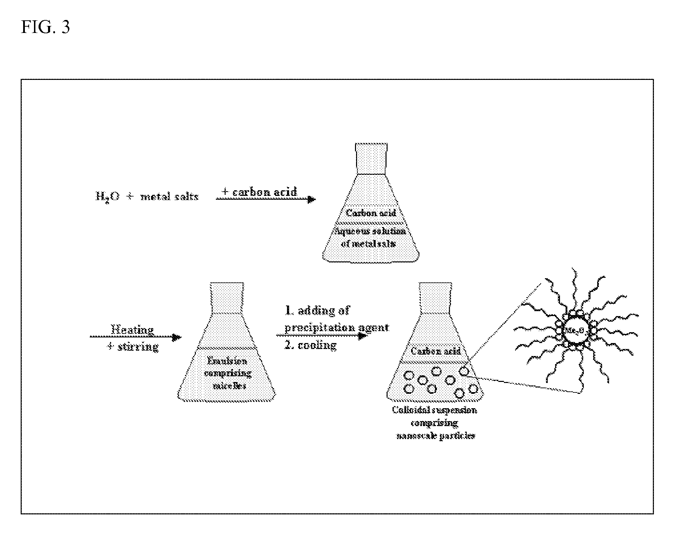

- Fig. 3: Simplified sketch illustrating the nanoscale particle formation.

### DETAILED DESCRIPTION OF EMBODIMENTS

Subject of the present invention is a method for the preparation of Me₂O₃ nanoparticles or MePO₄ nanoparticles that are thermodynamically stabilized by the complexation of the surface metal cations by carboxylic groups of amphiphilic carboxylic acids by precipitation in micellar microreactors comprising the steps of:
a. providing an aqueous solution comprising a metal salt or a blend of metal salts wherein the metal salt is selected from the group consisting of Me(III)-halide (e.g. chlorides), Me(III)-carbon acids (e.g. acetates) wherein the aqueous solution has a pH of below 6 to 7and wherein optionally a precipitant is added which is selected from the group comprising phosphates (phosphoric acid, phosphates or hydrogen phosphates) and;
b. adding one or more amphiphilic carboxylic acids to said aqueous solution, wherein the amphiphilic carboxylic acids have melting points in the range of from 0°C to 100°C;whereby the amphiphilic carboxylic acids form micelles;
c. raising the pH above 6 to 7 and raising the temperature above the melting temperature of the carboxylic acid, whereby the micelles of amphiphilic carboxylic acids form the microreactor and the Me₂O₃ nanoparticles or MePO₄ nanoparticles precipitate within the micelle microreactor;
d. cooling the solution below the melting point of the amphiphilic organic acid; and cooling down of the solution at room temperature causes a formation of a second phase, which is the crystallised carboxylic acid;
e. separating the solid phase from the colloidal solution the latter comprising the Me₂O₃ nanoparticles or MePO₄ nanoparticles, respectively.

Preferably, the temperature is raised in step c to about 50 K above the melting temperature of the carboxylic acid.

The precipitant may be added before the temperature is raised above the melting point of the carboxylic acid. The pH of the aqueous solution according to point a. of the method of the present invention is chosen such that precipitation of the metal hydroxides does not occur. The opposite holds true for step c. of the method wherein the pH is chosen such that precipitation may take place. In case of a trivalent cation the ratio of carboxylic acids to Me-ions is preferably 3:1 according to step b. of the above described method. The micelles may be formed by a blend of amphiphilic long-chain carbon acids.
In case of a blend of carboxylic acids the temperature is raised above the melting point of the blend (e.g. above the eutectic) according to point c. of the method.

Step a. of the above method is performed under conditions allowing for the formation of micelles, that means hydrophobic phases enclosed by the lipophilic phase.

In particular, it is preferred to apply amphiphilic long-chain carbon acids, which have a melting point between 0°and 100°C, to form micelles in water. The melting point of said carbon acids is more preferably between 50°C and 100°C.

The micelles form the microreactors, in which metal cations are precipitated by the reaction with OH- or P04- anions at a pH value higher than 6 to 7.

The nanoparticles may comprise different metal ions and may be a mixture of Me₂O₃ nanoparticles and MePO₄ nanoparticles.

Nanoparticles are preferred which produce an intensive luminescence.

In the method of the invention the concentration of the carbon acid is equal or higher than the concentration of the sum of the metal cations. In a preferred embodiment the ratio of the concentration is 1.05 - 10 to 1, more preferred 2 - 5 to 1.
The excess of carbon acids, i.e. the fraction which is not coordinated to the surface, of the nanoscale particle is separated after the reaction by cooling the colloidal solution below the freezing point of the carbon acid or carbon acid blend.

In a preferred embodiment the Me is selected from the group consisting of Al, Fe, Cr, In, Sc, Y, La, Ce, Pr, Nd, Pm, Sm, Eu, Gd, Tb, Dy, Ho, Er, Tm, Yb and Lu.

In another preferred embodiment the carboxylic acid is selected from the group consisting of oleic acid, capric acid, erucic acid, laurin acid, palmitic acid, myristic acid, brassidic acid, stearic acid, arachidic acid and behenic acid. Table 1 shows carbon acids useful for the methods and particles according to the invention and the according melting points of said carbon acids.

**Table 1: Melting points of carbon acids to be applied for the formation of nanoscale particles by the micellar method.**

| Carbon acid | Melting point [°C] |
|---|---|
| Oleic acid | 16 |
| Capric acid | 32 |
| Erucic acid | 34 |
| Laurin acid | 43 |
| Palmitic acid | 51 |
| Myristic acid | 58 |
| Brassidic acid | 62 |
| Stearic acid | 71 |
| Arachidic acid | 77 |
| Behenic acid | 80 |

In a preferred embodiment of the method in step c. the pH is raised by addition of a base. The base may be ammonia, LiOH, NaOH, KOH, RbOH, or CsOH. The base acts as an indirect precipitating agent, since it enhances the OH- concentration and thus destabilizes the metal complexes relative to the hydroxide. Other precipitating agents useful for the method according to the invention are any chemical, which enhances the OH-concentration.

The separation of the solid phase according to step e. of the inventive method may be performed by filtration, decantation, or centrifugation.

The method according to the present invention may additionally comprise a step of concentrating the liquid solution after separating the solid phase from the solution/ suspension. Concentrating the liquid solution after separating the solid phase according to step e. may be performed by evaporation or dialysis.

The method according to the present invention may additionally comprise the addition of a luminescent ion prior to raising the pH. In a preferred embodiment of the invention the luminescent ion emits in the near IR range. In a preferred embodiment of the invention the luminescent ion emits at a wavelength of between 700 nm and 1200 nm.

A further subject of the present invention are nanoparticles having a diameter of from 1 to 10 nm comprising amphiphilic carboxylic acids, wherein the carboxylic acids are arranged in a way that the carboxyl groups are at the inside of said nanoparticles and the hydrophobic tails of said carboxylic acids are at the outside of said nanoparticles and wherein Me₂O₃ or MePO₄ are coordinated to said carboxyl groups at the inside of said nanoparticles. The nanoscale particles with a diameter between 1 and 10 nm are thermodynamically stabilized by the complexation of the metal cations located at the surface by the carboxylic groups of the amphiphilic carboxylic acids. The degree of thermodynamic complexation is governed by the stability of the metal carboxylic acid coordination bond. Stronger complexation is achieved by using carboxylic acids with a lower acidity constant. In a preferred embodiment the acidity constant (pkA) of the carboxylic acids is from 0.5 to 8, preferably from 4 to 6. In another preferred embodiment the melting point of the carboxylic acids is between 50°C and 100°C.

According to the present invention nanoparticles are preferred wherein the amphiphilic carboxylic acids which are complexed to the metal part of the particles and which are used for the preparation of the inventive nanoparticles have melting points in the range of from 0°C to 100°C.

Preferred chain lengths of the amphiphilic carboxylic acids are described above and apply also in the context of the nanoparticles.
In general, preferred embodiments mentioned in the context of the methods according to the present invention shall be seen as preferred embodiments of the nanoparticles as well.

Thus, it is preferred that the Me of the inventive nanoparticle is selected from the group consisting of Al, Fe, Cr, In, Sc, Y, La, Ce, Pr, Nd, Pm, Sm, Eu, Gd, Tb, Dy, Ho, Er, Tm, Yb and Lu. It is especially preferred that the Me is selected from Lu, Gd, La, Sc, or Y.

The carboxylic acid is preferably selected from the group consisting of oleic acid, capric acid, erucic acid, laurin acid, palmitic acid, myristic acid, brassidic acid, stearic acid, arachidic acid and behenic acid.

A nanoparticle according to the present invention may additionally comprise a luminescent ion. It is preferred that the luminescent ion emits in the near IR range, preferably between 700 nm and 1200 nm, more preferably between 800 nm and 900 nm. Examples of luminescent ions are Pr³⁺, Nd³⁺, Sm³⁺, Eu³⁺, Tb³⁺, Dy³⁺, Ho³⁺, Er³⁺, Tm³⁺, and Yb³⁺.

Subject of the present invention is a nanoparticle according to the present invention for the use in *in-vivo* imaging methods. Such imaging methods may be optical imaging by near IR fluorescence.

Thus, subject of the present invention is the use of a nanoparticle according to the present invention as an imaging agent.

Especially preferred are nanoparticles, wherein imaging is magnetic resonance imaging and Me is Gd or Y).

The following examples describe some of the embodiment in greater detail. The following examples are not limiting to the scope of the present invention.

### EXAMPLES

### 1. Synthesis of nanoscale Gd₂O₃:Nd particles

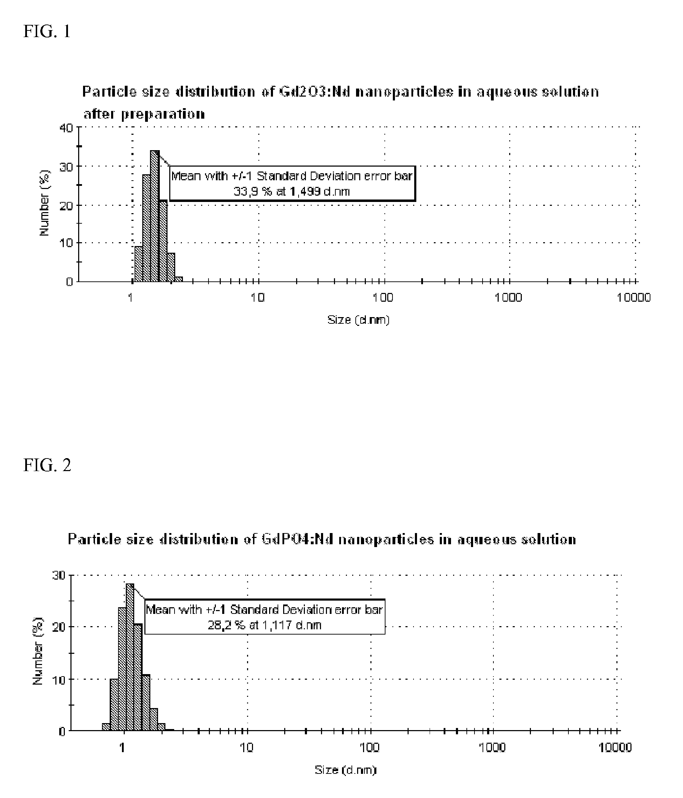

3.361 g (NH₄)₂H₂EDTA, 3.411 g Gd(CH₃COO)₃.H₂O, and 0.033 g Nd(CH₃COO)₃.H₂O are dissolved in 15 ml water under intimate stirring and subsequent heating to 50 to 95°C, which yields a clear and transparent solution. 0.206 g Solid lauric acid is added, which melts at 43°C, and therefore a transparent and colorless solution is obtained. Adding 2 to 3 ml concentrated ammonia at an elevated temperature gives a clear solution. Storing the solution for 24 h completes the reaction. By cooling down the solution to room temperature, lauric acid freezes out and appears as a second phase on top of the solution. Finally, the lauric acid phase is separated by decantation and the transparent solution is concentrated by evaporation. The colloidal suspension comprises nanoscale Gd₂O₃:Nd particles with a typical average particle size of 1 to 2 nm. The particle size distribution by number of stabilized Gd₂O₃:Nd nanoparticles in aqueous solution is shown in Figure 1.

### 2. Synthesis of nanoscale Y₂O₃:Nd particles

3.361 g (NH₄)₂H₂EDTA, 2,713 g Y(CH₃COO)₃.H₂O, and 0.033 g Nd(CH₃COO)₃.H₂O are dissolved in 20 ml water under intimate stirring and subsequent heating to 50 to 95°C, which yields a clear and transparent solution. 0.543 g Solid lauric acid are added, which melts at 43°C, and therefore a transparent and colorless solution is obtained. Adding 2 to 3 ml concentrated ammonia at an elevated temperature gives a clear solution. Storing the solution for 24 h completes the reaction. By cooling down the solution to room temperature, lauric acid freezes out and appears as a second phase on top of the solution. Finally, the lauric acid phase is separated by decantation and the transparent solution is concentrated by evaporation. The colloidal suspension comprises nanoscale Y₂O₃:Nd particles with a typical average particle size of 1 to 2 nm. The particle size distribution by number of stabilized Y₂O₃:Nd nanoparticles in aqueous solution is shown in Figure 2.

## Claims

1. A method for the preparation of nanoparticles that are thermodynamically stabilized by the complexation of the surface metal cations by carboxylic groups of amphiphilic carboxylic acids by precipitation in micellar microreactors comprising the steps of:
a. providing an aqueous solution comprising a metal salt or a blend of metal salts wherein the metal salt is selected from the group consisting of Me(III)-halide, Me(III)-carbon acids and wherein the aqueous solution has a pH of below 6 to 7;
b. adding one or more amphiphilic carboxylic acids to said aqueous solution, wherein the amphiphilic carboxylic acids have melting points in the range of from 0°C to 100°C;whereby the amphiphilic carboxylic acids form micelles;
c. raising the pH above 6 to 7 and raising the temperature above the melting temperature of the carboxylic acid, whereby the micelles of amphiphilic carboxylic acids form the microreactor and nanoparticles precipitate within the micelle microreactor;
d. cooling the solution below the melting point of the amphiphilic organic acid; and cooling down of the solution at room temperature causes a formation of a second phase, which is the crystallised carboxylic acid;
e. separating the solid phase from the colloidal solution the latter comprising the Me₂O₃ nanoparticles.

2. A method according to claim 1 wherein in step a. a precipitant phosphate is added that is selected from a group comprising phosphoric acid, phosphates or hydrogene phosphates and wherein the synthesized nanoparticles are MePO₄ nanoparticles.

3. The method according to claim 1 or 2, wherein Me is selected from the group consisting of Al, Fe, Cr, In, Sc, Y, La, Ce, Pr, Nd, Pm, Sm, Eu, Gd, Tb, Dy, Ho, Er, Tm, Yb and Lu.

4. The method according to claims 1 to 3, wherein the carboxylic acid is selected from the group consisting of oleic acid, capric acid, erucic acid, laurin acid, palmitic acid, myristic acid, brassidic acid, stearic acid, arachidic acid and behenic acid.

5. The method according to any one of claims 1 to 4, additionally comprising a step of concentrating the liquid solution after separating the solid phase from the solution/suspension.

6. The method according to any one of claims 1 to 5, additionally comprising the addition of a luminescent ion prior to raising the pH.

7. The method according to claim 6, wherein the luminescent ion emits at a wavelength of between 700 nm and 1200 nm.

8. A nanoparticle having a diameter of from 1 to 10 nm comprising amphiphilic carboxylic acids, wherein the carboxylic acids are arranged in a way that the carboxyl groups are at the inside of said nanoparticles and the hydrophobic tails of said carboxylic acids are at the outside of said nanoparticles and wherein Me₂O₃ or MePO₄ are coordinated to said carboxyl groups at the inside of said nanoparticles.

9. A nanoparticle according to claim 8, wherein Me is selected from the group consisting of Al, Fe, Cr, In, Sc, Y, La, Ce, Pr, Nd, Pm, Sm, Eu, Gd, Tb, Dy, Ho, Er, Tm, Yb and Lu.

10. A nanoparticle according to claim 8 or 9, wherein the carboxylic acid is selected from the group consisting of oleic acid, capric acid, erucic acid, laurin acid, palmitic acid, myristic acid, brassidic acid, stearic acid, arachidic acid and behenic acid.

11. A nanoparticle according to claims 8 to 10, additionally comprising a luminescent ion.

12. A nanoparticle according to claim 11, wherein the luminescent ion emits in the near IR range.

13. A nanoparticle according to claims 8 to 12 for the use in *in-vivo* imaging methods.

14. The use of a nanoparticle according to claims 8 to 12 as an imaging agent.

15. The nanoparticle according to claim 13 or the use according to claim 14, wherein imaging is magnetic resonance imaging and Me is Gd or Y.
